# FASCICULE DE BREVET EUROPEEN

(11) **EP 3 552 327 B1**
(45) Date de publication et mention de la délivrance du brevet: **01.09.2021**
(21) Numéro de dépôt: 17817813.3
(22) Date de dépôt: 08.12.2017
(51) Int. Cl.: H04B 13/00, G06Q 20/32, H04W 84/18, H04W 12/50

(54) **PROCÉDÉ DE PERSONNALISATION D'UNE TRANSACTION SÉCURISÉE LORS D'UNE COMMUNICATION RADIO**
VERFAHREN ZUR PERSONALISIERUNG EINER SICHEREN TRANSAKTION WÄHREND EINER FUNKKOMMUNIKATION
METHOD OF PERSONALIZING A SECURE TRANSACTION DURING A RADIO COMMUNICATION

(30) Priorité: 12.12.2016 FR 1662320
(43) Date de publication de la demande: 16.10.2019
(73) Titulaire: ORANGE, 92130 Issy-les-Moulineaux (FR)
(72) Inventeur: LEVIONNAIS, Philippe, 92326 Châtillon Cedex (FR); DUVAL, Clément, 92326 Châtillon Cedex (FR)
(86) Numéro de dépôt international: PCT/FR2017/053458
(87) Numéro de publication internationale: WO 2018/109330

(56) Documents cités:
- WO-A1-2006/120582
- WO-A1-2015/083126
- US-A1- 2009 233 548
- US-A1- 2016 227 446

## Description

L'invention concerne les communications initiées sur un canal sans fil à courte portée. Plus précisément, l'invention porte sur un procédé pour mettre en œuvre des services sécurisés et personnalisés entre un terminal portatif et un dispositif aptes à initier une communication utilisant la capacité de conductivité du corps humain pour transmettre les ondes électromagnétiques porteuses de telles communications sans fils.

### Etat de la technique

Récemment sont apparues de nouvelles techniques de communication sans fils utilisant pour canal le corps humain. Dans ces technologies que l'on regroupe sous le terme générique d'IBC (de l'anglais : *Intra-Body Communication*) ou encore BCC (pour *Body Channel Communication*), le corps humain agit comme un conducteur pour transmettre des informations d'un point à un autre. Elles se regroupent dans deux grandes catégories, les premières utilisant un couplage par induction (*capacitive coupling*), dans lequel le signal électromagnétique induit est couplé au travers de l'air ou du sol, et les secondes un couplage dit galvanique, pour lesquelles un courant alternatif est injecté dans le corps humain considéré comme un guide d'ondes.

On s'intéresse ici au premier type de méthodes basées sur un couplage par induction, aussi appelées fréquemment « méthodes par champ proche » ou NF (de l'anglais *Near Field*), adaptées à une communication de proximité, qui ne nécessitent pas forcément de contact physique avec le dispositif. Par « proximité », on entend une distance de l'ordre de quelques millimètres. Les communications en champ proche sont usuellement connues sous le sigle « NFC » (pour « Near Field Communication »), basées principalement sur la norme ISO (International Standard Organisation) 14443, utilisent des technologies sans fils pour permettre un échange d'informations entre deux périphériques éloignés d'une courte distance.

On connaît dans l'état de la technique des systèmes permettant d'échanger des messages en utilisant la capacité de conductivité du corps humain pour transmettre les ondes électromagnétiques porteuses de communications sans fils.

La demande de brevet internationale publiée sous le numéro WO2012/131224 décrit notamment un système de communication comprenant un dispositif émetteur portatif dont l'antenne est en contact avec, ou très proche, de l'utilisateur, que l'on appelle ici le «porteur». Le signal est modulé au moyen d'un modulateur basse fréquence et transmis à travers le corps de l'utilisateur. Il est en effet connu que le corps humain présente des capacités de conduction adaptées pour véhiculer de tels signaux électromagnétiques dès lors que l'antenne est située à proximité (on entend par là : à moins de quelques centimètres, mais pas nécessairement en contact) du corps de l'utilisateur et conçue de manière à rendre l'objectif attendu. Ce système selon l'état de l'art comporte aussi un récepteur qui comprend une surface constituée d'une antenne de même type que celle de l'émetteur et dont laquelle l'utilisateur peut approcher la main. Le dispositif récepteur reçoit le signal du fait de l'entrée en proximité physique de l'utilisateur avec l'antenne (de même on entend par là : à moins de quelques centimètres, mais pas nécessairement en contact). Le signal reçu est démodulé et transmis à l'équipement adapté pour effectuer des traitements, en l'espèce pour mettre en œuvre la transaction (paiement, ouverture de porte, etc.). Ces systèmes offrent l'avantage pour l'utilisateur de pouvoir conserver le terminal en poche durant toute la durée du traitement, donc d'avoir les mains libres, sans crainte de se faire dérober ou de laisser tomber le terminal, ou de perdre du temps en le cherchant dans un sac, etc.

Cependant, une telle architecture offre un canal de communication très limité : il est impossible aujourd'hui de faire transiter des messages de grande taille (par exemple des fichiers, des images, etc.) à travers le corps humain. De surcroit, ce type de solution impose au porteur de rester à proximité physique du dispositif récepteur, ce qui peut être contraignant. Enfin, ce type de communication n'est pas sécurisé, interdisant de ce fait des services impliquant des données personnelles de l'utilisateur (par exemple, bancaires).

US 2016/227446 A1 divulgue un système de communication utilisant un canal Body Channel Communication pour initier un échange de données et un canal de type différent pour l'échange de données. Cependant, un tel système impose au porteur de rester à proximité physique du dispositif récepteur pendant toute l'initialisation.

L'invention offre une solution ne présentant pas les inconvénients de l'état de la technique.

### L'invention

A cet effet, selon un aspect fonctionnel, l'invention concerne un procédé selon la revendication 1.

Par « premier canal », on entend un canal de communication basé sur une communication en champ proche. Le premier canal est établi par exemple entre le terminal et le dispositif maître, qui prend typiquement la forme d'une borne de type NFC ou IBC tel que définis ci-avant.

Par « second canal », on entend un canal de communication sans fils qui est distinct du premier canal. N'importe quelle technologie radio peut être utilisée dans ce contexte.

Par « donnée de personnalisation », on entend une donnée caractéristique du terminal et/ou de son utilisateur (par exemple son identité, ses droits, son poids, sa taille, ses préférences, etc.), sur la base de laquelle un service va pouvoir être personnalisé, c'est-à-dire adapté à l'utilisateur.

Le procédé selon l'invention permet d'initier la communication sur un premier canal (par exemple de type NFC ou IBC) entre un terminal de l'utilisateur (son porteur), et un dispositif maître tel qu'une borne de type NFC ou IBC, par un simple geste de l'utilisateur qui fait entrer sa main (ou toute autre partie de son corps) en proximité immédiate du dispositif et autorise donc son terminal à communiquer sur le premier canal.

Par « proximité immédiate », on entend une distance suffisamment petite pour que la communication soit établie sur le premier canal (par exemple inférieure à quelques cm).

Une fois que la communication est initiée, elle se poursuit avantageusement sur un second canal radio, de nature différente (Bluetooth, WiFI, Zigbee, etc). Par la suite, les données de vérification et les données de personnalisation nécessaires à l'établissement du service sont échangées sur ce second canal.

Avantageusement selon ce procédé, la communication établie entre le dispositif maître et le terminal est sécurisée, tout en permettant à l'utilisateur du terminal de le conserver dans sa poche. En effet, l'initialisation du procédé sur le premier canal permet d'utiliser une technologie en champ proche (NFC ou IBC) pour recevoir une donnée aléatoire qui va être utilisée par la suite pour sécuriser la transaction entre les deux entités sur le second canal, le premier canal étant abandonné. Ce procédé permet à la fois :
- d'authentifier le terminal de l'utilisateur, puisque seul un terminal autorisé (authentifié), c'est-à-dire connaissant la fonction permettant de générer le code secret sur la base de l'aléa, peut bénéficier du service de personnalisation ;
- de sécuriser la communication sur le second canal, car l'aléa utilisé pour les échanges sur le second canal est reçu en champ proche, donc sur un canal différent, avec une fréquence particulière et différente de celle du second canal. Cet aléa est donc difficile à obtenir pour un pirate qui se mettrait en écoute sur le second canal ;
- d'assurer un débit de données élevées, puisque le second canal (de type radio) n'a pas les contraintes éventuelles du canal en champ proche.

Selon un mode de mise en œuvre particulier du procédé de mise à disposition selon l'invention, un tel procédé est caractérisé en ce que le premier canal utilise des capacités de conduction d'onde électromagnétique du corps d'un utilisateur porteur du terminal, ledit terminal se trouvant à proximité immédiate du porteur, et en ce que le premier message est reçu lorsque le porteur du terminal effectue un mouvement pour rentrer dans la proximité immédiate du dispositif.

Par « premier canal », on entend ici un canal de communication de type IBC comme décrit ci-dessus, basé sur une communication en champ proche associée à une transmission du champ électromagnétique via le corps de l'utilisateur. Le premier canal est établi entre le terminal, situé typiquement dans la poche ou dans le sac de l'utilisateur, et le dispositif maître.

Le procédé selon l'invention permet d'initier la communication sur un premier canal de type IBC entre un terminal situé à proximité immédiate de l'utilisateur (son porteur), et un dispositif maître tel qu'une borne de type IBC, par un simple geste de l'utilisateur qui entre en proximité immédiate du dispositif par un geste volontaire vers le dispositif, jusqu'à s'en approcher d'une distance très faible. On rappelle que par « proximité immédiate », on entend une distance suffisamment petite pour que la communication soit établie sur le premier canal (par exemple inférieure à deux centimètres) ; on notera que la peau de l'utilisateur n'a pas besoin d'être en contact avec le terminal, et de la même manière, la main de l'utilisateur n'est pas nécessairement en contact physique avec le dispositif.

Avantageusement selon ce mode, la communication établie entre le dispositif maître et le terminal permet à l'utilisateur du terminal de le conserver dans sa poche. En effet, l'initialisation du procédé sur le premier canal IBC permet d'utiliser la conductivité du corps de l'utilisateur pour recevoir une donnée aléatoire qui va être utilisée par la suite pour sécuriser et personnaliser la transaction entre les deux entités (terminal et dispositif) sur le second canal, le premier canal étant abandonné. Ce procédé permet à la fois :
- de sécuriser l'aspect physique de la transaction, puisqu'à aucun moment l'utilisateur ne doit sortir le terminal de sa poche, grâce à la communication IBC ;
- d'assurer un débit de données élevées, puisque le second canal (de type radio) n'a pas les contraintes de très faible débit du canal IBC.

Selon un mode de mise en œuvre particulier du procédé de mise à disposition selon l'invention, qui pourra être mis en œuvre alternativement ou cumulativement avec le précédent, un tel procédé est caractérisé en ce que la donnée de personnalisation est transmise sur le second canal au dit dispositif.

Avantageusement selon ce mode de réalisation, qui pourra être mis en œuvre alternativement ou cumulativement avec les précédents, c'est le dispositif maître, qui a donc initié la communication, qui reçoit la donnée de personnalisation lui permettant de mettre en œuvre le service personnalisé pour cet utilisateur. Par exemple, s'il s'agit d'une porte, elle peut s'ouvrir conditionnellement à la donnée de personnalisation qu'elle a reçue.

Selon un autre mode de mise en œuvre particulier du procédé de mise à disposition selon l'invention, qui pourra être mis en œuvre alternativement ou cumulativement avec les précédents, un tel procédé est caractérisé en ce que :
- ladite requête pour une donnée de personnalisation comporte en outre au moins une adresse d'au moins un second dispositif ;
- ladite donnée de personnalisation est transmise au second dispositif en utilisant ladite adresse.

Avantageusement selon ce mode de réalisation, c'est un autre dispositif que le maître, mais dont l'adresse est connue du maître, qui reçoit la donnée de personnalisation lui permettant de mettre en œuvre le service personnalisé pour cet utilisateur. Par exemple, si le dispositif maître est situé au niveau de la porte d'entrée de la maison, il peut demander au terminal de répondre à un (ou plusieurs) objet(s) connecté(s) de la maison : volets roulants, téléviseur connecté, chaîne Hi-Fi, passerelle domestique, etc.

Selon un autre mode de mise en œuvre particulier du procédé de mise à disposition selon l'invention, qui pourra être mis en œuvre alternativement ou cumulativement avec les précédents, un tel procédé est caractérisé en ce que l'étape de transmission d'un message sur le second canal est précédée d'une étape d'ouverture du second canal si celui-ci est fermé.

Avantageusement selon ce mode, le terminal n'a pas nécessairement activé son module radio (e.g. Bluetooth) avant de s'approcher du dispositif maître. Il est ainsi possible de simplifier la gestion du procédé par l'utilisateur et de réaliser des économies d'énergie sur le terminal, en activant le module Bluetooth pour ouvrir le second canal uniquement lorsque la communication sur ce canal s'avère nécessaire à la poursuite de la transaction. Ceci contribue aussi à la sécurité de la communication sur le second canal, qui est limitée dans le temps, ce qui rend difficile le piratage des données.

Selon un autre mode de mise en œuvre particulier du procédé de mise à disposition selon l'invention, qui pourra être mis en œuvre alternativement ou cumulativement avec les précédents, un tel procédé est caractérisé en ce que le premier canal de communication est fermé en émission sur le terminal durant toute la durée du procédé.

Avantageusement selon ce mode, aucune émission de données par le terminal n'est autorisée pendant les étapes du procédé sur le canal IBC. Ceci permet de s'affranchir de la nécessité d'un module d'émission IBC dans le terminal (modulateur, etc.) et simplifie donc son architecture.

Selon un autre mode de mise en œuvre particulier du procédé de mise à disposition selon l'invention, qui pourra être mis en œuvre alternativement ou cumulativement avec les précédents, un tel procédé est caractérisé en ce que le premier message comporte en outre une donnée d'identification du service et :
- le procédé comporte en outre une étape de test de la validité de l'identifiant du service ;
- les étapes B à G sont effectuées seulement si l'identifiant du service est valide.

Avantageusement selon ce mode, le premier message diffusé par le dispositif maître comprend un identifiant du service. Cet identifiant permet immédiatement au terminal de savoir si le service proposé par le dispositif le concerne, c'est-à-dire s'il dispose des moyens matériels et logiciels pour sa mise en œuvre. Si ce n'est pas le cas, le procédé n'est pas mis en œuvre, et notamment le canal Bluetooth peut rester fermé, ce qui économise les ressources matérielles et logicielles du terminal. De surcroît cet identifiant de service permet de discriminer aisément deux terminaux qui se connecteraient à deux dispositifs distincts pour deux services différents, même si les deux utilisateurs des deux terminaux sont suffisamment proches de chacun des dispositifs pour établir potentiellement une communication.

Enfin, avantageusement, si les deux terminaux utilisent le même identifiant de service, on notera que la présence de l'aléa empêche qu'un terminal se connecte fortuitement à un dispositif qui n'est pas le dispositif visé : dans ce cas, le dispositif choisi par erreur ne validera pas la donnée secrète reçue et rejettera donc la connexion.

Selon un autre aspect fonctionnel, l'invention concerne un procédé selon la revendication 6.

Ce procédé présente par analogie les mêmes avantages que ceux mentionnés pour le procédé de mise à disposition s'exécutant sur le terminal, notamment il permet :
- d'authentifier le terminal de l'utilisateur, puisque seul un terminal autorisé (authentifié), c'est-à-dire connaissant la fonction permettant de générer le code secret sur la base de l'aléa, peut bénéficier du service de personnalisation ;
- de sécuriser la communication sur le second canal, car l'aléa utilisé pour les échanges sur le second canal est reçu en champ proche, donc sur un canal différent, avec une fréquence particulière et différente de celle du second canal. Cet aléa est donc difficile à obtenir pour un pirate qui se mettrait en écoute sur le second canal.
- d'assurer un débit de données élevées, puisque le second canal de type radio n'a pas les contraintes de débit très faible du canal en champ proche.

Selon un mode de mise en œuvre particulier du procédé de personnalisation selon l'invention, un tel procédé est en outre caractérisé en ce que :
- le premier message comporte une première donnée d'identification du service et le second message comporte une seconde donnée d'identification du service ;
- le procédé comporte une étape de comparaison du premier et du second identifiants du service ;
- les étapes J à N sont effectuées seulement si le premier et le second identifiants du service sont identiques.

Avantageusement, selon ce mode, le premier message diffusé par le dispositif maître comprend un identifiant du service qui lui est renvoyé dans un message d'acquittement du terminal. Cet identifiant permet au dispositif de savoir que le terminal est en mesure de mettre en œuvre le service. Si ce n'est pas le cas, le procédé n'est pas mis en œuvre, et notamment le canal Bluetooth peut rester fermé en émission, ce qui économise les ressources matérielles et logicielles du dispositif.

Selon un autre mode de mise en œuvre particulier du procédé de personnalisation selon l'invention, qui pourra être mis en œuvre alternativement ou cumulativement avec le précédent, un tel procédé est caractérisé en ce que, lors des étapes de diffusion d'un premier message sur le premier canal et de réception d'un second message sur le second canal, le second canal est fermé en émission sur le dispositif.

Avantageusement, ce mode de réalisation permet de sécuriser l'accès au dispositif maître, puisque seul un utilisateur connaissant sa localisation physique peut s'en approcher suffisamment et déclencher, par un geste volontaire d'approche, la réception du message (M1) en provenance du dispositif maître ; en effet le dispositif maître n'émet aucun message sur le second canal (Bluetooth) tant que l'acquittement n'a pas été reçu. Il est donc indétectable sur ce canal.

Selon un autre mode de mise en œuvre particulier du procédé de personnalisation selon l'invention, qui pourra être mis en œuvre alternativement ou cumulativement avec les précédents, un tel procédé est caractérisé en ce que le premier canal de communication est fermé en réception sur le dispositif durant toute la durée du procédé.

Avantageusement selon ce mode, aucune réception de données n'est autorisée pendant les étapes du procédé sur le canal IBC. Ceci permet de s'affranchir de la nécessité d'un module de réception IBC dans le dispositif maitre (démodulateur, etc.) et simplifie donc son architecture.

Selon un aspect matériel, l'invention concerne également un terminal selon la revendication 9.

Selon un autre aspect matériel, l'invention concerne également un dispositif selon la revendication 10.

Selon cet aspect matériel, l'invention concerne aussi un dispositif de personnalisation d'un service tel que décrit, ledit dispositif étant un dispositif en champ proche standard configuré pour pouvoir assurer une communication à travers le corps humain.

Selon un autre aspect matériel, l'invention concerne également un système de communication comprenant :
- un second dispositif, dit dispositif maître, tel que décrit précédemment ;
- un premier dispositif, dit terminal, tel que décrit précédemment, ledit terminal étant conçu de sorte à obtenir un premier message sur le premier canal lorsque le porteur du terminal effectue un mouvement pour rentrer dans la proximité immédiate du dispositif ;

Selon un autre aspect matériel, l'invention concerne également un programme d'ordinateur apte à être mis en œuvre dans un terminal tel que défini ci-dessus, le programme comprenant des instructions de code qui, lorsque le programme est exécuté par un processeur, réalise les étapes du procédé de mise à disposition de données de personnalisation.

Selon un autre aspect matériel, l'invention concerne également un programme d'ordinateur apte à être mis en œuvre dans un dispositif maître tel que défini ci-dessus, le programme comprenant des instructions de code qui, lorsque le programme est exécuté par un processeur, réalise les étapes du procédé de personnalisation.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon encore un autre aspect matériel, l'invention a trait à un support d'enregistrement lisible par un processeur de données sur lequel est enregistré un programme comprenant des instructions de code de programme pour l'exécution des étapes de l'un des procédés définis ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

De nombreux détails et avantages de l'invention seront mieux compris à la lecture de la description d'un mode particulier de réalisation en référence aux schémas annexés donnés à titre non limitatif et dans lesquels :

### Les figures

- la figure 1 représente un système de communication sans fils selon un mode de réalisation de l'invention lorsque l'utilisateur d'un terminal sollicite un service de personnalisation de la part d'un objet, dit dispositif maître ;
- la figure 2 représente un exemple de réalisation d'un terminal selon un mode de réalisation de l'invention ;
- la figure 3 représente un exemple de réalisation d'un dispositif maître selon un mode de réalisation de l'invention ;
- la figure 4 représente les étapes d'un procédé entre un terminal et un dispositif maître selon un mode de réalisation de l'invention.

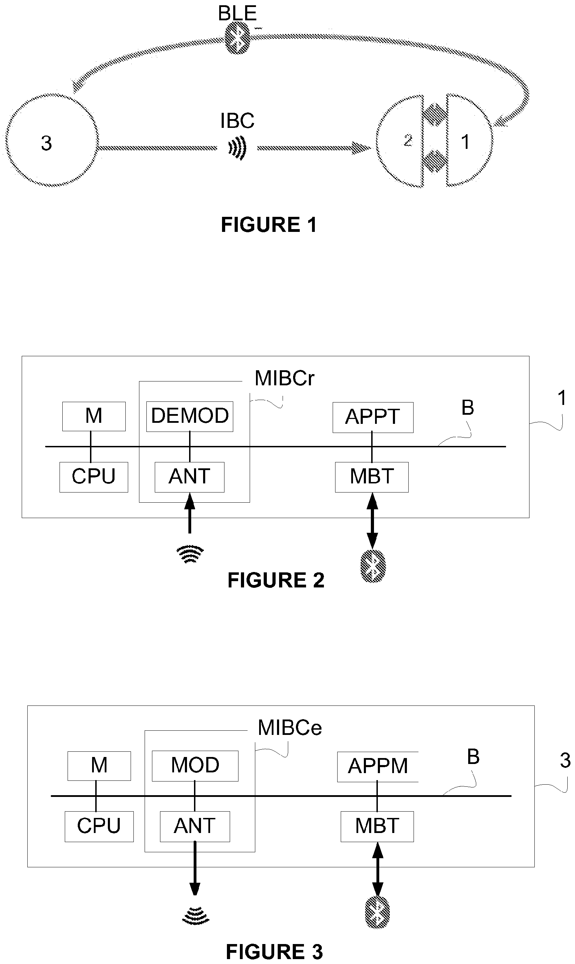

La figure 1 représente un système de communication sans fils selon un mode de réalisation de l'invention lorsqu'un utilisateur (2) porteur d'un dispositif portatif (1), appelé dans la suite terminal, équipé d'un module IBC tel que défini auparavant, s'approche d'un objet (3), dit entité maître, pour mettre en œuvre une transaction personnalisée ; il peut s'agir par exemple, d'un objet connecté (en anglais, IOT), ou d'un TPE (pour Terminal Electronique de Paiement), ou d'un ordinateur personnel, etc. Par transaction, on entend tout type de service, par exemple une transaction monétaire, une validation de ticket, ou encore une personnalisation active dans le cadre par exemple de l'utilisation d'un véhicule. L'utilisateur (2) ou porteur (du terminal), est par exemple un être humain mais pourrait alternativement prendre la forme d'un autre être vivant adapté pour transmettre des ondes porteuses radio.

Le terminal (1) selon l'invention est un dispositif portatif naturellement apte à recevoir des ondes porteuses radio, via une antenne, à travers le corps de l'utilisateur (2). A cette fin, le terminal (1) est situé à proximité immédiate de l'utilisateur (2), sans nécessairement être en contact direct avec celui-ci. Par exemple, le terminal (1) est placé à l'intérieur d'une poche ou d'un sac porté contre l'utilisateur. Dans ces configurations, on estime que le terminal (1) n'est pas éloigné de plus de quelques millimètres du corps de l'utilisateur (2). La distance est par exemple inférieure à 2 cm. Le terminal (1) est équipé d'une batterie ou de piles, pour un fonctionnement autonome. Il s'agit selon cet exemple d'un terminal mobile équipé d'une antenne IBC (non représentée) utilisée pour recevoir les signaux électriques modulés sous forme d'une onde électromagnétique. On notera que cette antenne est configurée en réception mais pas nécessairement en émission, ce qui limite les risques pour la santé du porteur. Dans le contexte de cet exemple de réalisation, l'antenne IBC est conçue de manière à recevoir de façon optimale l'onde électromagnétique à travers le corps humain ; elle est constituée à cet effet d'un ensemble de spires en nombre et disposition adéquats. Une telle antenne est décrite dans la demande précitée WO2012/131224. Le terminal portatif (1) est apte selon cet exemple à recevoir des ondes électromagnétiques à travers le corps de l'utilisateur lorsque celui-ci se trouve à proximité immédiate du dispositif maître. Le terminal comporte par ailleurs des moyens pour communiquer sur un second canal, par exemple Bluetooth, avec le dispositif maître.

Le dispositif maître (3) est un équipement apte à émettre des signaux radioélectriques, ou ondes porteuses, à travers le corps de l'utilisateur, via une antenne IBC (non représentée). Dans cet exemple de réalisation, le dispositif maître (3) comprend une surface constituée par l'antenne éventuellement protégée et adaptée pour réagir lorsque l'utilisateur l'effleure ou entre en proximité avec elle, par exemple en approchant la main. Le terme « surface » n'est nullement limitatif et donné à titre illustratif, l'antenne étant le seul moyen indispensable au fonctionnement du dispositif. L'ensemble constitué de l'antenne, de la surface et plus généralement de tous les composants nécessaires à la mise en œuvre d'une communication IBC est appelé dans la suite « Module IBC émetteur», noté MIBCe. On notera que ce module correspond au module NFC standard d'une borne de type NFC paramétrée pour une communication IBC par le chargement d'un programme (logiciel) spécifique, sans modification du hardware. Le dispositif maître selon cet exemple (3) est un ordinateur comprenant par exemple une interface utilisateur (9), encore appelée IHM, destinée à afficher des messages à l'attention de l'utilisateur et à recevoir éventuellement des données. Le dispositif maître comporte par ailleurs des moyens pour communiquer sur un second canal, par exemple Bluetooth, avec le terminal.

L'utilisateur (2) est par exemple, selon un premier scénario appelé par la suite « scénario de personnalisation d'un véhicule », le loueur d'un véhicule. Dans ce contexte, le dispositif maître est constitué de l'ordinateur de bord du véhicule et d'un module IBC comportant une surface telle que décrite précédemment, située par exemple dans la portière, dans la serrure, ou encore dans le volant de la voiture. Avantageusement si elle se trouve dans la poignée de la portière, l'utilisateur va forcément approcher sa main de l'antenne pour ouvrir la portière et déclencher le service. Par la suite, la mise en œuvre de l'invention permet, une fois l'utilisateur entré dans la voiture, de mettre en œuvre une personnalisation du véhicule : réglage des sièges (en fonction de paramètres corporels comme la taille et/ou le poids de l'utilisateur), des rétroviseurs, du mode de conduite (en fonction de préférences concernant par exemple le type de conduite plus ou moins sportive de l'utilisateur), etc. Selon un autre scénario appelé par la suite « scénario bancaire », l'utilisateur pourrait être dans un magasin et souhaiter régler un achat à l'aide d'une carte bancaire dématérialisée située sur son terminal. Le dispositif maître peut être selon cet exemple un TPE (Terminal de Paiement Electronique) équipé d'une antenne telle que décrite ci-dessus et apte à établir avec le terminal mobile une communication sécurisée dans le but de valider la transaction monétaire ; on notera que les TPE n'ont pas besoin d'être modifiés matériellement mais seulement être équipé de la technologie sans contact NFC et d'un moyen de communication sur le second canal (Bluetooth). Une évolution logicielle est toutefois nécessaire pour réaliser le procédé selon l'invention. Selon encore un autre scénario, appelé dans la suite « scénario domestique », l'utilisateur est un membre d'une famille et la transaction va permettre de personnaliser les objets connectés de la maison lorsqu'il rentre chez lui : il pose la main sur une « surface IBC » qui se trouve à l'entrée de son domicile. Selon la reconnaissance de l'utilisateur, un certain nombre d'actions peuvent être déclenchées dans le domicile : ouverture de porte, allumage des lumières, du téléviseur, etc. Selon encore un autre exemple, le dispositif maître est un objet connecté, posé par exemple sur le réfrigérateur, et celui-ci effectue des actions appropriées selon la personne qui vient de s'en approcher (remplissage, verrouillage, etc.). Selon encore un autre exemple, dit « scénario professionnel », deux utilisateurs A et B d'un même PC peuvent personnaliser les ressources, et notamment l'écran d'affichage du PC en manipulant la souris, qui comporte le dispositif maître : lorsque l'utilisateur A saisit la souris, le PC personnalise l'environnement de A (préférence, données, applications, bureau, affichage, etc.), puis automatiquement l'environnement de B lorsque B à son tour saisit la souris, le procédé permettant ainsi de basculer très naturellement d'un utilisateur à l'autre.

On notera que le terminal (1) peut potentiellement réaliser des transactions NFC directes s'il est approché du dispositif maître mais qu'il est plus intéressant d'utiliser des transactions IBC via le corps de l'utilisateur puisque ceci lui évite de sortir le terminal de sa poche, son sac, etc., ce qui offre à la fois une grande liberté de mouvement et une sécurité intéressante (contre le vol, la chute, etc. du terminal), ainsi qu'une simplification des usages puisque le porteur n'est même pas conscient, dans certains cas, par exemple dans le scénario de personnalisation du véhicule, que la communication s'est initialisée. La personnalisation du véhicule se fait en quelque sorte à son insu, dès qu'il pose la main sur la poignée de la portière.

Le terminal (1) et le dispositif maître (3) disposent par ailleurs classiquement de modules radio qui leur permettent de communiquer selon un protocole de communication sans fils connu, par exemple Bluetooth, Wi-Fi ou Zigbee. On rappelle que le Bluetooth est une technologie de réseau de faible portée permettant de relier des appareils entre eux sans liaison filaire. Bluetooth permet de transmettre des données ou de la voix entre des équipements équipés de modules radio, sur un rayon de l'ordre d'une dizaine de mètres à un peu moins d'une centaine de mètres et avec une faible consommation électrique. Le Bluetooth utilisé dans cet exemple de réalisation est de préférence de type Bluetooth Low Energy, ou BLE, caractérisé par une consommation très faible et une distance de fonctionnement de l'ordre du mètre (3 ou 4 au maximum), ce qui est suffisant pour le type de transactions visées. Le terme Wi-Fi recouvre pour sa part un ensemble de normes de la spécification IEEE 802.11 pour des communications sans fils pouvant aller jusqu'à quelques centaines de mètres. Le terme Zigbee désigne un ensemble de protocoles de communications de haut niveau utilisant des transmissions radio à faible consommation, basés sur la norme IEEE 802.15.4.

Dans le contexte qui nous intéresse, le procédé selon ce mode de réalisation de l'invention procède en trois temps, ou phases, qui sont transparentes pour l'utilisateur du terminal :
- Dans un premier temps, qui correspond à une phase dite « phase IBC », l'utilisateur s'approche du lecteur (3) et dirige sa main au-dessus de la surface comprenant l'antenne ; selon les exemples de services personnalisés mentionnés plus haut, le module IBC comprenant l'antenne et la surface du dispositif maître se trouvent dans la poignée de la voiture que l'utilisateur vient de louer (scénario de personnalisation du véhicule), dans un magasin (scénario bancaire), dans un objet connecté de la maison (scénario domestique), dans la souris d'ordinateur (scénario professionnel), et le terminal (1) de l'utilisateur est dans sa poche. L'application IBC installée sur le dispositif maître (1) émet un message initial (M1) comprenant une donnée aléatoire, ou aléa, et, selon ce mode de réalisation, un identifiant unique du service ; l'aléa est généré par le dispositif maître pour l'établissement ultérieur d'une communication sécurisée ; l'identifiant de service permet de cibler immédiatement un service qui est disponible à la fois sur le dispositif maître et sur le terminal (par exemple : service bancaire, service de personnalisation du véhicule, etc.) Le signal modulé porteur du message (M1) est véhiculé par le corps de l'utilisateur jusqu'à son terminal (qui se trouve par exemple dans sa poche), démodulé, décodé et analysé.
- Dans un second temps, qui correspond à une phase dite « phase BLE », le terminal (1), si l'identification du message reçu précédemment est correcte, c'est-à-dire si l'identifiant du service correspond à un service autorisé par le mobile, initie la transaction. Pour ce faire, il procède à un appairage avec le dispositif maître : il ouvre son canal radio (BLE), qui fait ici office de second canal, et émet un message radio sur ce canal à l'aide de son module d'émission radio. Ce canal de communication est distinct de celui utilisé pour le premier échange. Un appairage s'ensuit sur le canal radio entre les deux dispositifs.

A partir de ce moment, une session de communication est ouverte entre les deux dispositifs appairés, mais le terminal n'est pas authentifié, c'est-à-dire qu'un autre terminal pourrait se connecter au dispositif maître. Afin de procéder à l'authentification du terminal, le dispositif maître requiert une donnée secrète qui ne peut être déclarée valide que si les deux dispositifs disposent de la même fonction de calcul de la donnée secrète à partir de l'aléa reçu par le terminal au cours de la première phase sur le canal IBC. Après vérification de la validité de cette donnée secrète, les deux dispositifs peuvent échanger toutes les données nécessaires à l'établissement, la poursuite et la conclusion de la transaction (débit d'argent, de ticket, personnalisation du véhicule, de l'environnement de travail, etc.). On notera que, pendant cette seconde phase d'appairage et d'authentification entre le terminal et le dispositif maître, l'utilisateur a pu retirer sa main du lecteur et se déplacer pour rentrer par exemple dans la voiture ou dans son domicile. Ce mouvement est facultatif mais naturel dans la mesure où il n'est pas très agréable de rester en proximité immédiate avec l'antenne du dispositif si ce n'est pas nécessaire.
- Dans un troisième temps, qui correspond à une phase dite « phase PERSO », le terminal (1) transmet au dispositif maître une ou plusieurs données de personnalisation. Dans le contexte qui nous intéresse, ces données peuvent comporter par exemple le nom de l'utilisateur, qui pourra être utilisé pour personnaliser l'environnement de la maison (scénario domestique) ; les caractéristiques physiques de l'utilisateur (poids, taille, etc.) si l'on est dans le cadre du service de personnalisation d'un véhicule ; ses références bancaires dans le cadre d'une opération monétaire ; son login/mot de passe si l'on est dans le contexte du scénario professionnel ; etc. Le dispositif maître peut alors mettre en œuvre l'action de personnalisation adéquate correspondant aux données de personnalisation, par exemple selon les scénarios précédents : ouverture d'une porte ; mise en route d'une chaîne favorite sur le téléviseur ou la chaîne Hi-Fi, commande de remplissage du réfrigérateur, etc. ; réglage des sièges et rétroviseurs du véhicule ; validation de la transaction bancaire ; affichage de l'environnement de l'utilisateur à l'écran du PC ; etc.

Ainsi, la phase initiale d'envoi du nombre aléatoire est réalisée via la technologie IBC sur le premier canal en champ proche, puis les autres opérations (appairage, authentification et communication subséquente menant à la personnalisation du service) sont effectuées sur le second canal en Bluetooth, de manière tout à fait standard. Ceci est particulièrement avantageux pour toutes les raisons citées plus haut (liberté de mouvement, sécurité, personnalisation avec authentification, simplification des usages, etc.) En résumé, le second canal permet de bénéficier d'un débit plus élevé que celui offert par une communication IBC standard, et offre une sécurisation supplémentaire des échanges.

Cet exemple de réalisation a été donné à titre illustratif et nullement limitatif.

Alternativement, toute autre communication de type « sans fils » pourrait être utilisée (liaison sans fils de type DECT, etc.), voire même une liaison filaire, du moment que le second canal utilisé n'exploite pas les propriétés de conduction du corps de l'utilisateur et ne l'oblige donc pas à rester à proximité immédiate du lecteur pendant les deuxième et troisième phases.

Un dispositif terminal (1) selon l'invention va maintenant être décrit en relation avec la figure 2. Le terminal (1) est par exemple un terminal mobile de type *smartphone* adapté pour mettre en œuvre l'invention. Selon un autre exemple, le terminal est une simple carte électronique équipée des modules suivants :
- une unité de traitement, ou « CPU » (pour « Central Processing Unit »), destinée à charger des instructions en mémoire, à les exécuter, à effectuer des opérations ;
- un ensemble M de mémoires, dont une mémoire volatile, ou "RAM" (pour "Random Access Memory") utilisée pour exécuter des instructions de code, stocker des variables, etc. et une mémoire non volatile de type « ROM » (de l'anglais « Read Only Memory »), ou « EEPROM » (pour « Electronically Erasable Programmable Read Only Memory ») destinée à contenir des informations persistantes, notamment les données de personnalisation de l'utilisateur.

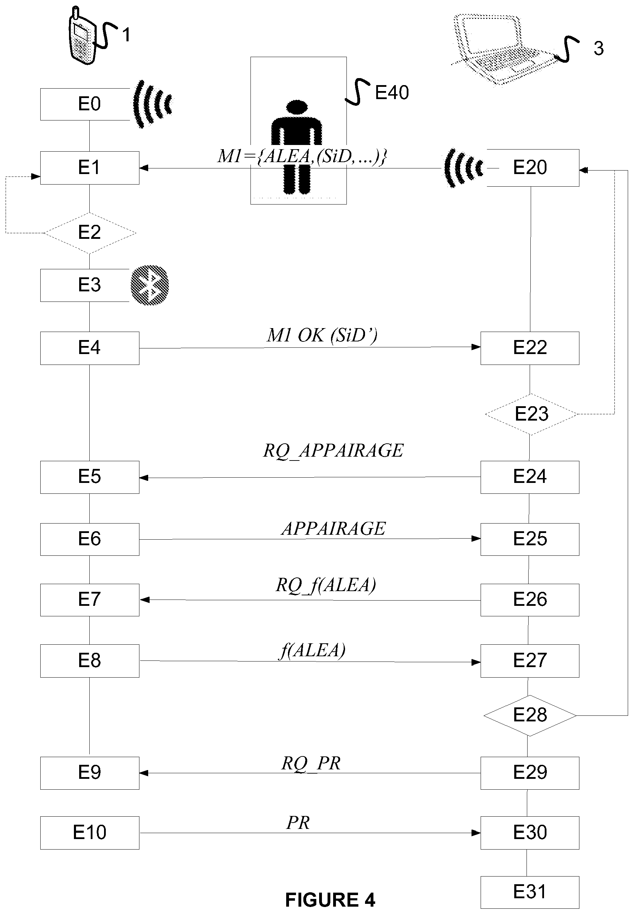

- un module dit « Module IBC récepteur », MIBCr, incluant :
   - une antenne IBC (ANT) adaptée pour recevoir des signaux sur la voie radio et via le corps humain, de manière à ce qu'un signal électrique modulé transporté par le corps de l'utilisateur soit apte à être reçu par l'antenne, qui se trouve dans le terminal, en proximité avec le corps humain ;
   - un démodulateur (DEMOD), destiné à recevoir via l'antenne un signal électrique modulé et à le transformer en un signal numérique destiné à être transmis à l'unité de traitement. Le démodulateur est agencé pour mettre en œuvre les étapes de démodulation du procédé de communication décrit par la suite ;
   - on notera que la présence d'un modulateur (destiné à adapter si nécessaire un signal numérique produit par le CPU en un signal électrique modulé, destiné à être transmis via l'antenne) n'est pas nécessaire dans notre exemple de réalisation puisque le terminal n'émet pas de données en IBC, mais pourrait être utile selon certaines variantes d'implémentation ;
   - les composantes logicielles (firmware, etc.) nécessaires à la mise en œuvre des communications IBC.
- un module Bluetooth (MBT) (Low Energy - BLE - selon cet exemple), destiné à émettre et recevoir des données sur un canal Bluetooth établi avec un dispositif externe apte à communiquer selon cette norme, en l'occurrence le dispositif maître. Le module MBT est notamment agencé pour mettre en œuvre l'étape d'émission d'un message d'acquittement vers le dispositif maître (3) ainsi que les étapes de réception/émission de messages relatifs à la transaction sur le canal Bluetooth, comme il sera détaillé par la suite à l'appui de la figure 4. Le module MBT est relié à l'antenne, soit directement soit via le biais du terminal (smartphone) :
   - dans le premier cas, le module Bluetooth se trouve par exemple sur un substrat regroupant tous les modules nécessaires au fonctionnement IBC (Antenne, démodulateur, microprocesseur, etc.). Il est relié à la sortie du démodulateur d'antenne, par le biais éventuel d'autres circuits. Il reçoit les données démodulées et éventuellement traitées par un microprocesseur, et se charge d'établir le canal de communication Bluetooth. Avantageusement dans ce cas tous les modules peuvent être regroupés sur la même entité physique et/ou logique (circuit, composant, etc.), et supportés par exemple par une carte électronique que l'utilisateur peut porter dans sa poche, sans être nécessairement associée à un terminal mobile ;
   - dans le second cas, le module Bluetooth se trouve ailleurs dans le terminal. Les signaux d'antenne démodulés sont transmis au microprocesseur du terminal qui se charge d'établir la communication Bluetooth avec le dispositif maître. Avantageusement dans ce cas, le module Bluetooth présent nativement sur le terminal (un smartphone par exemple) peut être réutilisé.
- Une application (APPT) destinée à la mise en œuvre du procédé selon un mode de réalisation de l'invention, notamment l'acquisition d'un aléa via le module IBC, l'appairage Bluetooth, la fabrication d'une donnée secrète sur la base de l'aléa, l'acquisition et la communication des données de personnalisation sur le canal Bluetooth. Cette application peut être par exemple une *Applet* dont la référence correspond à l'identifiant de service mentionné préalablement.

Un dispositif maître (3) selon l'invention va maintenant être décrit en relation avec la figure 3.

Le dispositif maître comprend plusieurs modules qui sont similaires à ceux du terminal 1 décrit en relation avec la figure 2 :
- une unité de traitement ou « CPU », destinée à charger des instructions en mémoire, à les exécuter, à effectuer des opérations.
- un ensemble de mémoires, dont une mémoire volatile ou "RAM" (pour "Random Access Memory") utilisée pour exécuter des instructions de code, stocker des variables, etc., et une mémoire non volatile, de type « ROM » ou « EEPROM » destinée à contenir des informations persistantes ;
- un module dit « Module IBC émetteur », MIBCe, incluant :
   - une antenne IBC (ANT) adaptée pour émettre des signaux sur la voie radio et via le corps humain, recouverte d'une surface S (non représentée);
   - un modulateur (MOD) destiné à adapter un signal numérique produit par le microprocesseur en un signal électrique modulé, destiné à être transmis, via l'antenne, à travers le corps de l'utilisateur. Le modulateur est agencé pour mettre en œuvre les étapes d'émission du message initial (M1) décrit précédemment ; l'opération de modulation effectuée par le modulateur est dans notre mode de réalisation une modulation d'amplitude. Ainsi, par exemple, le signal est un signal à 13,56 MHz modulé en amplitude avec un taux de modulation d'environ 10% (caractéristique connue du type B selon la norme NFC). L'invention n'est cependant pas limitée à ce type de modulation. Dans un autre exemple de réalisation, la modulation est une modulation de fréquence, moins sensible aux parasites. On note que cette réalisation est cependant plus coûteuse car elle nécessite plus de composants. Dans un autre exemple de réalisation, une modulation de phase peut être réalisée ;
   - la présence d'un démodulateur n'est pas nécessaire dans le contexte de ce mode de réalisation de l'invention ;
   - une surface réceptrice, non représentée, adaptée pour réagir à la proximité immédiate de l'utilisateur (contact, quasi-contact, effleurement, etc.). Dans l'exemple décrit ici, cette surface IBC correspond à l'antenne, de manière à ce qu'un signal électrique modulé émis via l'antenne soit apte à être véhiculé par le corps de l'utilisateur qui est en proximité avec la surface. Dans un exemple de réalisation, l'antenne peut être intégrée dans la surface. La surface est agencée de manière à coopérer avec l'unité de traitement pour mettre en œuvre les étapes du procédé qui sera décrit ultérieurement ;
   - les composantes logicielles (firmware, etc.) nécessaires à la mise en œuvre des communications IBC.
      - un module Bluetooth Low Energy (MBT) destiné à émettre et recevoir des données sur un canal Bluetooth établi avec un dispositif externe, en l'occurrence le terminal mobile. Le module MBT est notamment agencé pour mettre en œuvre les étapes de réception/émission de messages relatifs à la transaction sur le canal Bluetooth.
      - optionnellement une interface utilisateur (IHM), adaptée pour transmettre à l'utilisateur des instructions ou des messages d'information. Par exemple, l'interface utilisateur est un écran sur lequel les messages et instructions sont affichés. Dans un autre exemple de réalisation, l'interface est une interface audio permettant de jouer les messages et instructions. L'IHM peut aussi comporter un clavier, un micro, etc.
      - Une application (APPM) destinée à la mise en œuvre du procédé selon un mode de réalisation de l'invention, notamment la génération d'un aléa, via le module IBC, l'appairage Bluetooth, la vérification de la donnée secrète sur la base de l'aléa, la requête et la réception des données de personnalisation sur le canal Bluetooth, et la mise en œuvre de la personnalisation du service sur la base de ces données. Cette application correspond à (ou porte) l'identifiant de service mentionné préalablement, apte à communiquer avec l'application APPT sur le terminal.

On notera que n'importe quel lecteur du commerce (par exemple un TPE) peut avantageusement être utilisé en tant que dispositif maître, à condition de bénéficier du module MBT et du module MIBCe, après une simple mise à jour du logiciel du lecteur (installation et/ou mise à jour de l'application APPM et paramétrage de l'émission NFC) pour le rendre apte à émettre un message possédant les caractéristiques (fréquence, modulation, etc.) IBC via son antenne.

La figure 4 représente les étapes d'un procédé de communication sans fils bidirectionnelle sécurisée entre un dispositif mobile (1), aussi appelé terminal, porté par un utilisateur (2), et un dispositif maître (3), équipés tous deux d'un module (antenne, surface, modulateur/démodulateur, firmware, etc.) IBC, selon un mode de réalisation de l'invention. Outre leur fonction IBC, les deux dispositifs sont aptes à établir un autre canal de communication, de préférence radio (Bluetooth, BLE, WiFI, etc.), de manière à assurer un débit correct, la sécurité de la transaction et l'authentification de l'utilisateur.

Dans une étape initiale E20, le dispositif maître (3) émet via son antenne IBC un signal electro-magnétique codant un message M1 destiné à tout terminal situé à proximité, par exemple le terminal (1) porté par l'utilisateur (2) lorsqu'il s'approchera du dispositif. Le message M1, dit premier message, ou message d'invite, comprend une pluralité d'éléments d'information destinés à être transmis en continu pendant une certaine période pendant laquelle le dispositif maître (3) est en mode émission. Par exemple l'élément d'information consiste en un mot, « IBC», ou bien un identifiant (SiD) du service offert (service de paiement, de personnalisation d'un véhicule, etc.), suivi d'un aléa (ALEA) qui permettra d'effectuer une authentification de la transaction après la phase d'appairage. Le dispositif maître est par ailleurs en écoute sur un second canal de communication, selon notre exemple un canal BLE. Il est à noter que le dispositif maître est à ce moment indétectable sur le second canal car il n'émet pas de message sur le canal radio, mais seulement sur le canal IBC.

Au cours d'une étape initiale E0, le terminal se positionne en mode de réception IBC (c'est-à-dire qu'il est apte à recevoir un message sur le canal IBC).

Au cours de l'étape E40, l'utilisateur 2 approche par exemple sa main de l'antenne IBC du dispositif maître 3 ; le message M1 émis dans un signal modulé au cours de l'étape précédente est détecté et reçu par le terminal (1). En effet, l'utilisateur, (2) dont la main est à proximité immédiate de l'antenne IBC du dispositif, devient un vecteur de transmission du signal émis par le dispositif maître (3). Le terminal (1), en état de réception, détecte et reçoit le signal électromagnétique modulé véhiculé par le corps de l'utilisateur. Le terminal (1) démodule le signal pour obtenir un signal numérique et en extrait les informations pertinentes (aléa, optionnellement identification du service, etc.)

A l'issue de cette étape, l'utilisateur peut s'écarter du dispositif maître et le premier canal (IBC) peut être refermé. Cette fermeture est de préférence implicite : dès que l'utilisateur s'éloigne du dispositif maître, le canal de transmission ne peut plus véhiculer de signaux et la transmission s'interrompt. Cette étape est facultative dans la mesure où l'utilisateur peut, s'il le souhaite, rester près du dispositif maître, avec la main posée au-dessus, mais ceci ne présente aucun intérêt dans le contexte de ce mode de réalisation puisque la phase d'acquisition du message M1 comportant l'aléa est terminée. Si le canal constitué par le corps de l'utilisateur reste ouvert, aucune donnée n'y transitera plus.

Dans une étape suivante E2, le terminal (1) vérifie optionnellement l'identifiant de service reçu dans le message M1. Si l'identifiant de service est correct, c'est-à-dire s'il correspond bien à une application du terminal, il passe à l'étape suivante. Sinon il revient à l'étape E1 précédente (et le procédé s'arrête dès que l'utilisateur s'éloigne du dispositif maître).

Dans une étape suivante E3, le terminal (1) vérifie l'état de son module Bluetooth ; si ce module n'est pas actif, il ouvre le canal Bluetooth.

Puis il prépare une réponse pour le dispositif maître. Le message numérique associé à la réponse, ou second message (schématisé sur la figure par *M1_OK*), est diffusé à l'étape E4 via l'antenne du terminal (1) sur un canal radio Bluetooth. Il peut s'agir par exemple de paquets de données BLE comportant un message de présence avec, si disponible, l'identification SiD du service reçu précédemment, ainsi que, optionnellement, d'autres informations qui peuvent être pertinentes : adresse (MAC) du terminal, nom, conditions de connexion audit terminal, etc.

Dans une étape E22 de détection et de réception, le message émis au cours de l'étape précédente E4 par le terminal (1) et transmis en Bluetooth est détecté et reçu par le dispositif maître (3).

Le message de réponse est testé au cours d'une étape E23. Si le message reçu est acceptable, c'est à dire si la forme de l'acquittement est correcte et si les autres informations éventuelles sont en conformité avec les attentes du dispositif maître (numéro de service, adresse MAC, etc.), il peut accepter la communication Bluetooth avec le terminal ; il effectue lors de l'étape E24 une demande d'appairage avec le terminal. Sinon le dispositif maître (3) peut notifier alors au terminal lors de cette même étape que le service ne peut être rendu.

Lors de l'une de ces étapes, le dispositif maître cesse d'émettre le message d'invite sur la liaison IBC car il est déjà en communication avec un terminal.

Lors d'une étape E6, le terminal s'appaire (se connecte) avec le dispositif maitre.

La procédure d'appairage mise en œuvre dans ce mode de réalisation est tout à fait classique et connue de l'homme du métier ; pour mémoire, un appairage Bluetooth (BLE) prend la forme suivante : le dispositif maître envoie un nombre aléatoire au dispositif « esclave » (ici, le terminal). L'esclave renvoie son adresse Bluetooth (un périphérique Bluetooth dispose d'une adresse unique, comme l'adresse MAC des cartes réseau. Cette adresse est formée de 48 bits : les trois premiers octets identifient le fabricant, les trois suivants sont ceux attribués au périphérique). À partir de ce nombre aléatoire et de l'adresse Bluetooth, une clef de chiffrage peut être calculée pour l'échange des messages entre le maître et l'esclave. Cette clé de chiffrage permet d'éviter des attaques pirates en relai (en anglais : « Man in the middle »).

A partir de cet instant, un lien bidirectionnel de communication est établi entre les deux entités. On notera que ce lien est sécurisé dans la mesure où le protocole utilisé est sécurisé (par exemple la norme BLE impose un certain niveau de sécurité aux échanges entre deux dispositifs connectés de manière bidirectionnelle). Cependant, la communication n'est pas authentifiée, c'est-à-dire que le dispositif maître n'est pas encore certain de l'identité du terminal (et donc de l'utilisateur) qui vient de s'appairer.

A cette fin, le dispositif maître requiert, lors d'une étape E26, une donnée d'authentification de la part du terminal. Cette donnée d'authentification, que l'on appelle aussi donnée secrète, est selon cet exemple une fonction f connue des deux entités prenant en paramètre la variable ALEA (f(ALEA)). Toute fonction de sécurité à la portée de l'homme du métier pourra être utilisée ici : fonction identité, fonctions cryptographiques, combinaison de fonctions, ... Cette fonction peut de surcroît évoluer dans le temps.

Cette requête est reçue par le terminal lors d'une étape E7.

Le terminal, s'il est autorisé à établir une transaction de ce type avec le maître, c'est-à-dire s'il connaît la fonction f, calcule un résultat de la fonction f en utilisant l'ALEA comme paramètre et transmet le résultat au dispositif maître lors d'une étape E8.

Le dispositif maitre reçoit lors d'une étape E27 cette information et en teste la validité au cours de l'étape suivante E28. Si l'information attendue est conforme à ce qui est exigé par le dispositif maître, c'est-à-dire si elle a été calculée à l'aide de la bonne fonction f prenant en paramètre le bon aléa, le dispositif maître accepte la communication et passe à l'étape suivante E29. Sinon elle n'accepte pas la communication, met fin à l'échange avec le terminal, et le procédé peut reprendre à l'étape E20.

On notera que le couple (aléa, identifiant) permet de discriminer dans tous les cas un terminal 1 conversant avec un premier dispositif 3 d'un terminal 1' conversant avec un dispositif 3' qui seraient proches :
- dans le cas où les deux dispositifs (3 et 3') offrent des services différents (par exemple un service bancaire et un service de transport), l'identifiant des deux services est différent. Les deux porteurs des terminaux 1 et 1' effectuent un geste volontaire d'approche au même moment, ou du moins dans un intervalle de temps suffisamment étroit pour générer potentiellement une collision. Les dispositifs 3 et 3' diffusent cependant chacun leur identifiant de service. Selon le procédé décrit dans ce mode de réalisation de l'invention, le dispositif 3 repère uniquement le terminal 1 lorsqu'il acquitte le service bancaire et s'y connecte, tandis que le dispositif 3' se connecte à 1', sans aucune interférence entre les deux procédés.
- dans le cas où les deux dispositifs (3 et 3') offrent le même type de service (par exemple un service bancaire) on peut imaginer que l'identifiant de service est le même. Les deux porteurs des terminaux 1 et 1' effectuent un geste volontaire d'approche au même moment, ou du moins dans un intervalle de temps suffisamment étroit pour générer potentiellement une collision. Les dispositifs 3 et 3' diffusent cependant tous deux le même identifiant de service. Selon le procédé décrit dans ce mode de réalisation de l'invention, si le dispositif 3 se connecte au terminal 1 (qui a acquitté l'identifiant de service), le second terminal ne pourra s'y connecter car la borne a cessé de diffuser le message d'invite dans la mesure où elle est déjà connectée à un terminal. En revanche, si le dispositif 3 se connecte d'abord au terminal 1', l'étape de vérification de la donnée secrète permet au dispositif de rejeter le terminal, qui ne correspond pas à ce qu'il attendait. Le dispositif 3 notifie alors au terminal 1' que le paiement ne peut s'effectuer (étape E23). Puis il recommence à émettre son message d'invite, et le terminal 1 peut se connecter.

A partir de cette étape E29, le dispositif maître a donc authentifié le terminal. Il peut entamer la phase de personnalisation en demandant l'obtention d'une donnée de personnalisation, ou plus généralement d'un profil (PR) du terminal (donc de l'utilisateur).

Cette donnée de personnalisation lui est transmise lors d'une étape E10. Comme il a été décrit auparavant, cette donnée dépend de l'application : profil complet de l'utilisateur du mobile, préférences, taille, poids, dimensions, login, nom, âge, adresse, etc. Optionnellement, cette donnée peut être chiffrée selon tout mécanisme à la portée de l'homme du métier afin de renforcer la sécurité de la communication.

Le dispositif maître reçoit cette donnée de personnalisation au cours d'une étape E30, puis, lors d'une étape E31, met en œuvre l'action de personnalisation adéquate correspondant au profil (ouverture d'une porte, mise en route du téléviseur, de la chaîne Hi-Fi ; réglage des sièges et rétroviseur du véhicule ; validation de la transaction bancaire ; personnalisation du PC, etc.) Puis il peut mettre fin à la transaction et optionnellement refermer le canal radio.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Notamment, on peut concevoir une authentification du dispositif par le terminal, qui éviterait qu'un dispositif (borne) factice ne prenne la place de la vraie borne. Dans ce cas, les étapes d'authentification du terminal par la borne (E7, E8, E26, E27) seront suivies d'étapes similaires permettant d'authentifier la borne par un mécanisme analogue: envoi d'un second aléa dans un second message (M2= {ALEA'...}), du terminal vers la borne, et calcul par la borne d'une donnée secrète (G(ALEA)) par une seconde fonction G, identique ou non à la première, renvoyée au terminal. Le terminal peut alors comparer la donnée secrète reçue à celle attendue et décider d'authentifier ou non la borne émettrice.

## Revendications

1. Procédé de mise à disposition de données de personnalisation d'un service entre un terminal (1) et un dispositif (3), le dispositif (3) se trouvant à proximité immédiate d'un utilisateur (2) porteur du terminal (1) et étant apte à communiquer avec le terminal (1) :
- sur un premier canal (IBC) en champ proche (NF) utilisant des capacités de conduction d'onde électromagnétique du corps dudit porteur du terminal (1), et :
- sur un second canal sans fils (BLE) distinct du premier canal (IBC), le premier canal étant unidirectionnel et le procédé comportant, sur le terminal, les étapes de :
A. obtention (E1) d'un premier message (Ml) sur le premier canal, ledit message comprenant au moins une donnée aléatoire (ALEA) lorsque ledit porteur du terminal (2) effectue un mouvement pour rentrer dans la proximité immédiate du dispositif (3) ;
B. transmission (E4), sur le second canal (BLE), d'un second message (M1_OK) en réponse au premier message (Ml) ;
C. établissement (E5, E6) d'une session de communication sur le second canal (BLE) avec le dispositif ;
D. calcul (E8) d'une donnée secrète (f(ALEA)) en fonction de la donnée aléatoire (ALEA) reçue ;
E. transmission (E8) de la donnée secrète (f(ALEA)) sur le second canal ;
F. réception (E9) d'une requête (RQ_PR) pour une donnée de personnalisation (PR) sur le second canal ;
G. transmission (E10) d'au moins une donnée de personnalisation (PR) en réponse à la requête.

2. Procédé de mise à disposition de données de personnalisation selon la revendication 1, **caractérisée en ce que** la donnée de personnalisation est transmise sur le second canal au dit dispositif (3) ;

3. Procédé de mise à disposition de données de personnalisation selon la revendication 1, **caractérisée en ce que** :
- ladite requête (RQ_PR) pour une donnée de personnalisation (PR) comporte en outre au moins une adresse d'au moins un second dispositif ;
- ladite donnée de personnalisation est transmise au second dispositif en utilisant ladite adresse.

4. Procédé de mise à disposition de données de personnalisation selon la revendication 1, **caractérisée en ce que** l'étape (E4) de transmission d'un message (Ml) sur le second canal est précédée d'une étape d'ouverture (E3) du second canal si celui-ci est fermé.

5. Procédé de mise à disposition de données de personnalisation selon la revendication 1, **caractérisée en ce que** le premier message comporte en outre une donnée d'identification du service (SiD) et :
- le procédé comporte en outre une étape de test (E2) de la validité de l'identifiant du service (SiD) ;
- les étapes B à G sont effectuées seulement si l'identifiant du service est valide.

6. Procédé de personnalisation d'un service entre un dispositif (3) et un terminal (1), le dispositif (3) se trouvant à proximité immédiate d'un utilisateur (2) porteur du terminal (1) et étant apte à communiquer avec le terminal (1) :
- sur un premier canal (IBC) en champ proche (NF) utilisant des capacités de conduction d'onde électromagnétique du corps du porteur du terminal (1) et
- sur un second canal sans fils (BLE) ayant un support distinct du premier canal,
le premier canal étant unidirectionnel et le procédé comportant, sur le dispositif maître (3), les étapes de :
H. diffusion (E20) d'un premier message (Ml) sur le premier canal, ledit message comprenant au moins une donnée aléatoire (ALEA);
I. réception (E22), sur le second canal (BLE), d'un second message (M1_OK) en réponse au premier message (Ml) diffusé sur le premier canal lorsque ledit porteur du terminal effectue un mouvement pour rentrer dans la proximité immédiate du dispositif (3) ;
J. établissement (E24, E25) d'une session de communication sur le second canal (BLE) avec le terminal ;
K. obtention (E26, E27), sur le second canal, d'une donnée secrète (f(ALEA)) ;
L. Evaluation (E28) de la validité de la donnée secrète en fonction de la donnée aléatoire (f(ALEA)) ;
M. En fonction de la validité de la sonnée secrète, acquisition (E29, E30) par le dispositif maître (3) d'une donnée de personnalisation (PR) du terminal sur le second canal (BLE) ;
N. Mise en œuvre (E31) du service de personnalisation.

7. Procédé de personnalisation selon la revendication 6, caractérisé en en ce que :
- le premier message (Ml) comporte une première donnée d'identification du service (SiD) et le second message (M1_OK) comporte une seconde donnée d'identification du service (SiD') ;
- le procédé comporte en outre une étape de comparaison (E23) du premier et du second identifiants du service (SiD) ;
- les étapes J à N sont effectuées seulement si le premier et le second identifiants du service (SiD, SiD') sont identiques.

8. Procédé de personnalisation selon la revendication 6, caractérisé en en ce que, lors des étapes de diffusion (E20) d'un premier message (Ml) sur le premier canal, et de réception (E22) d'un second message (M1_OK) sur le second canal, le second canal (BLE) est fermé en émission sur le dispositif.

9. Terminal (1) pour la mise à disposition de données de personnalisation d'un service, le terminal (1) étant apte à communiquer avec un dispositif (3) quand ledit dispositif (3) se trouve à proximité immédiate de l'utilisateur (2) du terminal (1), via :
- un premier module de communication (MIBCr) pour un premier canal (IBC) en champ proche (NF) utilisant des capacités de conduction d'onde électromagnétique du corps dudit porteur du terminal (1), et
- un second module de communication (MBT) pour un second canal sans fils (BLE) distinct du premier canal,
le premier canal étant unidirectionnel et le terminal(1) comportant, en outre :
- un module d'obtention (APPT, MIBCr) d'un premier message (Ml) sur le premier canal, ledit message comprenant au moins une donnée aléatoire (ALEA) lorsque ledit porteur du terminal (2) effectue un mouvement pour rentrer dans la proximité immédiate du dispositif (3);
- un module de transmission (APPT, MBT), sur le second canal, d'un second message en réponse au premier message ;
- un module d'établissement d'une session de communication sur le second canal (BLE) avec le dispositif (3) ;
- un module de calcul (APPT, CPU) d'une donnée secrète (f(ALEA)) en fonction de la donnée aléatoire reçue ;
- un module de transmission (MBT) de la donnée secrète (f(ALEA)) sur le second canal ;
- un module de réception (MBT) d'une requête pour une donnée de personnalisation sur le second canal ;
- un module de transmission (MBT) d'au moins une donnée de personnalisation (PR), en réponse à la requête.

10. Dispositif (3) de personnalisation d'un service, le dispositif étant apte à communiquer avec un terminal (1) quand ledit dispositif (3) se trouve à proximité immédiate de l'utilisateur (2) du terminal (1), via :
- un premier module (MIBCe) sur un premier canal (IBC) unidirectionnel en champ proche utilisant des capacités de conduction d'onde électromagnétique du corps du porteur du terminal (1), et
- un second module (MBT) sur un second canal sans fils (BLE) ayant un support distinct du premier,
le premier canal étant unidirectionnel et le dispositif (3) comportant en outre :
- un module de diffusion (APPM, MIBCe) d'un premier message (Ml) sur le premier canal, ledit message comprenant au moins une donnée aléatoire (ALEA);
- un module de réception (APPM, MBT), sur le second canal (BLE), d'un second message en réponse au premier message (Ml) diffusé sur le premier canal lorsque ledit porteur du terminal effectue un mouvement pour rentrer dans la proximité immédiate du dispositif (3);
- un module d'établissement d'une session de communication sur le second canal (BLE) avec le terminal ;
- un module d'obtention, sur le second canal, d'une donnée secrète (f(ALEA)) ;
- un module d'évaluation de la validité de la donnée secrète en fonction de la donnée aléatoire (f(ALEA)) ;
- un module d'acquisition, par le dispositif maître, d'une donnée de personnalisation du terminal sur le second canal ;
- un module de mise en œuvre du service de personnalisation.

11. Dispositif (3) de personnalisation d'un service selon la revendication 10, ledit dispositif étant un dispositif en champ proche (NFC) standard, configuré pour pouvoir assurer une communication (IBC) à travers le corps humain.

12. Programme d'ordinateur apte à être mis en œuvre sur un terminal tel que défini dans la revendication 9, le programme comprenant des instructions de code qui, lorsque le programme est exécuté par un processeur, réalise les étapes du procédé selon la revendication 1.

13. Programme d'ordinateur apte à être mis en œuvre sur un dispositif tel que défini dans la revendication 10, le programme comprenant des instructions de code qui, lorsque le programme est exécuté par un processeur, réalise les étapes du procédé selon la revendication 6.

## Patentansprüche

1. Verfahren zur Bereitstellung von Personalisierungsdaten eines Diensts zwischen einem Endgerät (1) und einer Vorrichtung (3), wobei die Vorrichtung (3) sich in direkter Nähe eines das Endgerät (1) tragenden Benutzers (2) befindet und mit dem Endgerät (1) kommunizieren kann:
- auf einem ersten Kanal (IBC) im Nahfeld (NF) unter Verwendung von Fähigkeiten des Körpers des Trägers des Endgeräts (1) zum Leiten einer elektromagnetischen Welle, und:
- auf einem zweiten drahtlosen Kanal (BLE) anders als der erste Kanal (IBC),
wobei der erste Kanal unidirektional ist, und das Verfahren auf dem Endgerät die folgenden Schritte aufweist:
A. Erhalt (E1) einer ersten Nachricht (Ml) auf dem ersten Kanal, wobei die Nachricht mindestens einen Zufallsdatenwert (ALEA) enthält, wenn der Träger (2) des Endgeräts eine Bewegung ausführt, um in die direkte Nähe der Vorrichtung (3) einzutreten;
B. Übertragung (E4) einer zweiten Nachricht (M1_OK) auf dem zweiten Kanal (BLE) als Antwort auf die erste Nachricht (Ml);
C. Aufbau (E5, E6) einer Kommunikationssitzung mit der Vorrichtung auf dem zweiten Kanal (BLE);
D. Berechnung (E8) eines geheimen Datenwerts (f(ALEA)) abhängig vom empfangenen Zufallsdatenwert (ALEA);
E. Übertragung (E8) des geheimen Datenwerts (f(ALEA)) auf dem zweiten Kanal;
F. Empfang (E9) einer Anforderung (RQ_PR) eines Personalisierungsdatenwerts (PR) auf dem zweiten Kanal;
G. Übertragung (E10) mindestens eines Personalisierungsdatenwerts (PR) als Antwort auf die Anforderung.

2. Verfahren zur Bereitstellung von Personalisierungsdaten nach Anspruch 1, **dadurch gekennzeichnet, dass** der Personalisierungsdatenwert auf dem zweiten Kanal an die Vorrichtung (3) übertragen wird.

3. Verfahren zur Bereitstellung von Personalisierungsdaten nach Anspruch 1, **dadurch gekennzeichnet, dass**:
- die Anforderung (RQ_PR) eines Personalisierungsdatenwerts (PR) außerdem mindestens eine Adresse mindestens einer zweiten Vorrichtung aufweist;
- der Personalisierungsdatenwert unter Verwendung der Adresse an die zweite Vorrichtung übertragen wird.

4. Verfahren zur Bereitstellung von Personalisierungsdaten nach Anspruch 1, **dadurch gekennzeichnet, dass** vor dem Schritt (E4) der Übertragung einer Nachricht (Ml) auf dem zweiten Kanal ein Schritt der Öffnung (E3) des zweiten Kanals liegt, wenn dieser geschlossen ist.

5. Verfahren zur Bereitstellung von Personalisierungsdaten nach Anspruch 1, **dadurch gekennzeichnet, dass** die erste Nachricht außerdem einen Identifizierungsdatenwert des Diensts (SiD) aufweist, und:
- das Verfahren außerdem einen Testschritt (E2) der Gültigkeit der Kennung des Diensts (SiD) aufweist;
- die Schritte B bis G nur ausgeführt werden, wenn die Kennung des Diensts gültig ist.

6. Personalisierungsverfahren eines Diensts zwischen einer Vorrichtung (3) und einem Endgerät (1), wobei die Vorrichtung (3) sich in direkter Nähe eines das Endgerät (1) tragenden Benutzers (2) befindet und mit dem Endgerät (1) kommunizieren kann:
- auf einem ersten Kanal (IBC) im Nahfeld (NF) unter Verwendung von Fähigkeiten des Körpers des Trägers des Endgeräts (1) zum Leiten einer elektromagnetischen Welle und
- auf einem zweiten drahtlosen Kanal (BLE), der ein anderes Trägermaterial als der erste Kanal hat,
wobei der erste Kanal unidirektional ist und das Verfahren auf der Master-Vorrichtung (3) die folgenden Schritte aufweist:
H. Verbreitung (E20) einer ersten Nachricht (Ml) auf dem ersten Kanal, wobei die Nachricht mindestens einen Zufallsdatenwert (ALEA) enthält;
I. Empfang (E22) einer zweiten Nachricht (M1_OK) auf dem zweiten Kanal (BLE) als Antwort auf die auf dem ersten Kanal verbreitete erste Nachricht (M1), wenn der Träger des Endgeräts eine Bewegung ausführt, um in die direkte Nähe der Vorrichtung (3) einzutreten;
J. Aufbau (E24, E25) einer Kommunikationssitzung mit dem Endgerät auf dem zweiten Kanal (BLE);
K. Erhalt (E26, E27) eines geheimen Datenwerts (f(ALEA)) auf dem zweiten Kanal;
L. Bewertung (E28) der Gültigkeit des geheimen Datenwerts abhängig vom Zufallsdatenwert (f(ALEA));
M. abhängig von der Gültigkeit des geheimen Datenwerts, Erfassung (E29, E30) eines Personalisierungsdatenwerts (PR) des Endgeräts auf dem zweiten Kanal (BLE) durch die Master-Vorrichtung (3) ;
N. Durchführung (E31) des Personalisierungsdiensts.

7. Personalisierungsverfahren nach Anspruch 6, **dadurch gekennzeichnet, dass**:
- die erste Nachricht (Ml) einen ersten Identifizierungsdatenwert des Diensts (SiD) aufweist, und die zweite Nachricht (M1_OK) einen zweiten Identifizierungsdatenwert des Diensts (SiD') aufweist;
- das Verfahren außerdem einen Schritt des Vergleichs (E23) der ersten und der zweiten Kennung des Diensts (SiD) aufweist;
- die Schritte J bis N nur ausgeführt werden, wenn die erste und die zweite Kennung des Diensts (SiD, SiD') gleich sind.

8. Personalisierungsverfahren nach Anspruch 6, **dadurch gekennzeichnet, dass** während der Schritte der Verbreitung (E20) einer ersten Nachricht (Ml) auf dem ersten Kanal und des Empfangs (E22) einer zweiten Nachricht (M1_OK) auf dem zweiten Kanal der zweite Kanal (BLE) in Senderichtung auf der Vorrichtung geschlossen ist.

9. Endgerät (1) zur Bereitstellung von Personalisierungsdaten eines Diensts, wobei das Endgerät (1) mit einer Vorrichtung (3) kommunizieren kann, wenn die Vorrichtung (3) sich in direkter Nähe des Benutzers (2) des Endgeräts (1) befindet, über:
- ein erstes Kommunikationsmodul (MIBCr) für einen ersten Kanal (IBC) im Nahfeld (NF), das Fähigkeiten des Körpers des Trägers des Endgeräts (1) zum Leiten einer elektromagnetischen Welle verwendet, und
- ein zweites Kommunikationsmodul (MBT) für einen zweiten drahtlosen Kanal (BLE) anders als der erste Kanal,
wobei der erste Kanal unidirektional ist und das Endgerät (1) außerdem aufweist:
- ein Modul des Erhalts (APPT, MIBCr) einer ersten Nachricht (Ml) auf dem ersten Kanal, wobei die Nachricht mindestens einen Zufallsdatenwert (ALEA) enthält, wenn der Träger des Endgeräts (2) eine Bewegung ausführt, um in die direkte Nähe der Vorrichtung (3) einzutreten;
- ein Übertragungsmodul (APPT, MBT) einer zweiten Nachricht auf dem zweiten Kanal als Antwort auf die erste Nachricht;
- ein Aufbaumodul einer Kommunikationssitzung mit der Vorrichtung (3) auf dem zweiten Kanal (BLE);
- ein Berechnungsmodul (APPT, CPU) eines geheimen Datenwerts (f(ALEA)) abhängig vom empfangenen Zufallsdatenwert;
- ein Übertragungsmodul (MBT) des geheimen Datenwerts (f(ALEA)) auf dem zweiten Kanal;
- ein Empfangsmodul (MBT) einer Anforderung eines Personalisierungsdatenwerts auf dem zweiten Kanal;
- ein Übertragungsmodul (MBT) mindestens eines Personalisierungsdatenwerts (PR) als Antwort auf die Anforderung.

10. Vorrichtung (3) zur Personalisierung eines Diensts, wobei die Vorrichtung mit einem Endgerät (1) kommunizieren kann, wenn die Vorrichtung (3) sich in direkter Nähe des Benutzers (2) des Endgeräts (1) befindet, über:
- ein erstes Modul (MIBCe) auf einem ersten unidirektionalen Kanal (IBC) im Nahfeld, das Fähigkeiten des Körpers des Trägers des Endgeräts (1) zum Leiten einer elektromagnetischen Welle verwendet, und
- ein zweites Modul (MBT) auf einem drahtlosen zweiten Kanal (BLE), das ein anderes Trägermaterial hat als das erste,
wobei der erste Kanal unidirektional ist und die Vorrichtung (3) außerdem aufweist:
- ein Modul zur Verbreitung (APPM, MIBCr) einer ersten Nachricht (Ml) auf dem ersten Kanal, wobei die Nachricht mindestens einen Zufallsdatenwert (ALEA) enthält;
- ein Modul zum Empfang (APPM, MBT) einer zweiten Nachricht auf dem zweiten Kanal (BLE) als Antwort auf die auf dem ersten Kanal verbreitete erste Nachricht (Ml), wenn der Träger des Endgeräts eine Bewegung ausführt, um in die direkte Nähe der Vorrichtung (3) einzutreten;
- ein Modul zum Aufbau einer Kommunikationssitzung mit dem Endgerät auf dem zweiten Kanal (BLE);
- ein Modul zum Erhalt eines geheimen Datenwerts (f(ALEA)) auf dem zweiten Kanal;
- ein Modul zur Bewertung der Gültigkeit des geheimen Datenwerts abhängig vom Zufallsdatenwert (f(ALEA));
- ein Modul zur Erfassung eines Personalisierungsdatenwerts des Endgeräts auf dem zweiten Kanal durch die Master-Vorrichtung;
- ein Modul zur Durchführung des Personalisierungsdiensts.

11. Vorrichtung (3) zur Personalisierung eines Diensts nach Anspruch 10, wobei die Vorrichtung eine Standard-Nahfeldvorrichtung (NFC) ist, konfiguriert, um eine Kommunikation (IBC) durch den menschlichen Körper hindurch gewährleisten zu können.

12. Computerprogramm, das auf einem Endgerät wie im Anspruch 9 definiert durchgeführt werden kann, wobei das Programm Codeanweisungen enthält, das, wenn das Programm von einem Prozessor ausgeführt wird, die Schritte des Verfahrens nach Anspruch 1 ausführt.

13. Computerprogramm, das auf einer Vorrichtung wie im Anspruch 10 definiert durchgeführt werden kann, wobei das Programm Codeanweisungen enthält, das, wenn das Programm von einem Prozessor ausgeführt wird, die Schritte des Verfahrens nach Anspruch 6 ausführt.

## Claims

1. Method for providing service personalisation data between a terminal (1) and a device (3), the device (3) being located in the immediate proximity to a user (2) who is the holder of the terminal (1) and capable of communicating with the terminal (1):
- over a first channel (IBC) in near field (NF) using the electromagnetic wave conduction capabilities of a body of said holder of the terminal (1), and:
- over a second, wireless channel (BLE) distinct from the first channel (IBC), the first channel being unidirectional and the method comprising, on the terminal, the steps of:
A. obtaining (E1) a first message (M1) over the first channel, said message comprising at least one random datum (ALEA) when said holder of the terminal (2) performs a movement to enter the immediate proximity of the device (3);
B. transmission (E4), over the second channel (BLE), of a second message (M1_OK) in response to the first message (M1);
C. establishing (E5, E6) a communication session over the second channel (BLE) with the device;
D. computing (E8) a secret datum (f(ALEA)) as a function of the random datum (ALEA) received;
E. transmission (E8) of the secret datum (f(ALEA)) over the second channel;
F. reception (E9) of a request (RQ_PR) for a personalisation datum (PR) over the second channel;
G. transmission (E10) of at least one personalisation datum (PR) in response to the request.

2. Method for providing personalisation data according to Claim 1, **characterized in that** the personalisation datum is transmitted over the second channel to said device (3).

3. Method for providing personalisation data according to Claim 1, **characterized in that**:
- said request (RQ_PR) for a personalisation datum (PR) also comprises at least one address of at least one second device;
- said personalisation datum is transmitted to the second device by using said address.

4. Method for providing personalisation data according to Claim 1, **characterized in that** the step (E4) of transmission of a message (M1) over the second channel is preceded by a step of opening (E3) the second channel if the latter is closed.

5. Method for providing personalisation data according to Claim 1, **characterized in that** the first message further comprises a service identification datum (SiD) and:
- the method further comprises a step of testing (E2) the validity of the service identifier (SiD);
- the steps B to G are performed only if the service identifier is valid.

6. Method for personalising a service between a device (3) and a terminal (1), the device (3) being located in immediate proximity to a user (2) who is the holder of the terminal (1) and being capable of communicating with the terminal (1):
- over a first channel (IBC) in near field (NF) using the electromagnetic wave conduction capabilities of the body of the holder of the terminal (1) and
- over a second, wireless channel (BLE) having a carrier distinct from the first channel,
the first channel being unidirectional and the method comprising, on the master device (3), the steps of:
H. broadcasting (E20) a first message (M1) over the first channel, said message comprising at least one random datum (ALEA);
I. reception (E22), over the second channel (BLE), of a second message (M1_OK) in response to the first message (M1) broadcast over the first channel when said holder of the terminal performs a movement to enter the immediate proximity of the device (3);
J. establishing (E24, E25) a communication session over the second channel (BLE) with the terminal;
K. obtaining (E26, E27), over the second channel, a secret datum (f(ALEA));
L. evaluation (E28) of the validity of the secret datum as a function of the random datum (f(ALEA));
M. depending on the validity of the secret datum, acquisition (E29, E30) by the master device (3) of a terminal personalisation datum (PR) over the second channel (BLE);
N. implementation (E31) of the personalisation service.

7. Personalisation method according to Claim 6, **characterized in that**:
- the first message (M1) comprises a first service identification datum (SiD) and the second message (M1_OK) comprises a second service identification datum (SiD');
- the method further comprises a step of comparison (E23) of the first and second service identifiers (SiD);
- the steps J to N are performed only if the first and second service identifiers (SiD, SiD') are identical.

8. Personalisation method according to Claim 6, **characterized in that**, during the steps of broadcasting (E20) a first message (M1) over the first channel, and of reception (E22) of a second message (M1_OK) over the second channel, the second channel (BLE) is closed in transmission on the device.

9. Terminal (1) for providing service personalisation data, the terminal (1) being capable of communicating with a device (3) when said device (3) is located in immediate proximity to the user (2) of the terminal (1), via:
- a first communication module (MIBCr) for a first channel (IBC) in near field (NF) using the electromagnetic wave conduction capabilities of the body of said holder of the terminal (1), and
- a second communication module (MBT) for a second, wireless channel (BLE) distinct from the first channel,
the first channel being unidirectional and the terminal (1) further comprising:
- a module for obtaining (APPT, MIBCr) a first message (M1) over the first channel, said message comprising at least one random datum (ALEA) when said holder of the terminal (2) performs a movement to enter the immediate proximity of the device (3);
- a module for transmitting (APPT, MBT), over the second channel, a second message in response to the first message;
- a module for establishing a communication session over the second channel (BLE) with the device (3);
- a module for computing (APPT, CPU) a secret datum (f(ALEA)) as a function of the random datum received;
- a module for transmitting (MBT) the secret datum (f(ALEA)) over the second channel;
- a module for receiving (MBT) a request for a personalisation datum over the second channel;
- a module for transmitting (MBT) at least one personalisation datum (PR) in response to the request.

10. Device (3) for personalising a service, the device being able to communicate with a terminal (1) when said device (3) is located in immediate proximity to the user (2) of the terminal (1), via:
- a first module (MIBCe) over a first, unidirectional channel (IBC) in near field mode using the electromagnetic wave conduction capabilities of the body of the holder of the terminal (1), and
- a second module (MBT) over a second, wireless channel (BLE) having a carrier distinct from the first,
the first channel being unidirectional and the device (3) further comprising:
- a module for broadcasting (APPM, MIBCe) a first message (M1) over the first channel, said message comprising at least one random datum (ALEA);
- a module for receiving (APPM, MBT), over the second channel (BLE), a second message in response to the first message (M1) broadcast over the first channel when said holder of the terminal performs a movement to enter the immediate proximity of the device (3);
- a module for establishing a communication session over the second channel (BLE) with the terminal;
- a module for obtaining, over the second channel, a secret datum (f(ALEA));
- a module for evaluating the validity of the secret datum as a function of the random datum (f(ALEA));
- a module for acquiring, by the master device, a terminal personalisation datum over the second channel;
- a module for implementing the personalisation service.

11. Device (3) for personalising a service according to Claim 10, said device being a standard near-field device (NFC), configured to be able to ensure communication (IBC) through the human body.

12. Computer program that can be implemented on a terminal as defined in Claim 9, the program comprising code instructions which, when the program is run by a processor, perform the steps of the method according to Claim 1.

13. Computer program that can be implemented on a device as defined in Claim 10, the program comprising code instructions which, when the program is run by a processor, perform the steps of the method according to Claim 6.
